(19) Europäisches Patentamt
European Patent Office
Office européen des brevets

(11) **EP 4 488 879 A1**

(12) **EUROPEAN PATENT APPLICATION**

(43) Date of publication:
**08.01.2025 Bulletin 2025/02**

(21) Application number: **23183596.8**

(22) Date of filing: **05.07.2023**

(51) International Patent Classification (IPC):
**G06N 3/045** (2023.01)    **G06N 3/0455** (2023.01)
**G06N 3/047** (2023.01)    **G06N 3/088** (2023.01)
**G06N 3/094** (2023.01)    **H04N 21/482** (2011.01)
**G06Q 30/0241** (2023.01)

(52) Cooperative Patent Classification (CPC):
**G06N 3/0455; G06N 3/047; G06N 3/088;**
**G06N 3/0895; G06N 3/094;** G06Q 30/0241

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Lemon Inc.**
**Grand Cayman, KY1-1205 (KY)**

(72) Inventors:
• **TON, Jean-Francois**
**London, EC2Y 5EB (GB)**
• **YANG, Mengyue**
**London, EC2Y 5EB (GB)**

(74) Representative: **Dentons UK and Middle East LLP**
**One Fleet Place**
**London EC4M 7WS (GB)**

Remarks:
Amended claims in accordance with Rule 137(2)
EPC.

(54) **METHOD, COMPUTER READABLE MEDIUM, RECOMMENDATION SYSTEM, ELECTRONIC DEVICE FOR DEBIASING DATA**

(57) Present approach includes methods, computer readable medium, systems, devices for debiasing data. Debiased data is received by or for training a recommendation system. The present approach includes steps of receiving data comprising sensitive-correlated information; obtaining sensitivity representations of the sensitive-correlated information from the data using a plurality of neural networks trained in relation to a set of predetermined context features; deriving a learned representation from the sensitivity representations; and generating a balanced fair prediction from the recommendation system based on the learned representation.

## Description

### *Technical Field*

The present application is in the field of bias rectification in recommendation platforms or systems.

### *Background*

Popular online recommendation platforms aim to facilitate the efficient browsing of items by providing personalized recommendations to customers based on their interests. These platforms use recommendation policies that connect customers and producers by training their models on large amounts of logged data. However, the social responsibility of recommendation systems has become a pressing issue in recent times, with users questioning the transparency and possible biases in these systems.

Examples of bias in such systems are apparent in the cosmetics industry's advertisement sector, where the training data may contain biases leading to the recommendation of makeup products primarily to women, even if they are not interested in cosmetics. This unfairness stems from feedback loops that amplify correlations between gender and cosmetics at each recommendation iteration. Gender, which is sensitive information, may not be explicitly used as an input to the recommendation system but can be inferred from other inputs correlated with gender, such as purchasing history or social media following. Moreover, there may be other biases, such as item-specific biases, where popular items receive more exposure than less popular ones, thus limiting the audience to smaller vendors.

The problem of unfairness due to biased training data is well-known, and building a model based on such data creates feedback loops that amplify biases, making it harder to determine the true relevance score. Traditionally, fairness constraints have been designed based on sensitive information to ensure fair treatment of individuals or groups under the online policy. However, these model-based approaches mainly focus on fair predictions, i.e., exposure being independent of the sensitive attributes, which may degrade the performance of the original recommendation model.

For these reasons, there is an unmet need to tackle the unfairness caused by biased training data while maintaining the original performance of the recommendation model/system by using a novel approach to rectifying unfairness in the recommendation systems described herein.

### *Summary*

This summary is provided to introduce a simplified selection of concepts, which is further described below in the Detailed Description. This summary is not intended to identify key features or essential features of the claimed subject matter; variants and alternative features which facilitate the working of the claimed subject matter, and/or serve to achieve a substantially similar technical effect should be considered as falling into the scope of the claims.

The present invention tackles the problem of fairness in recommendation systems feedback loops from a data debiasing perspective. The proposed approach involves learning debiased representations of the data as input for downstream recommendation models, enabling unbiased recommendations to users. The concept of balanced fairness is hereby introduced. This concept involves training a model on a dataset where recommendations are uniformly selected based on sensitive attributes. This is a two-stage process. In the first stage, the representation learning framework extracts sensitive-correlated information from context features. In the second stage, the process removes biases across sensitive groups using an adversarial learning strategy. It is understood that this approach is orthogonal to standard fairness constraint-based methods (or other similar methods) and can thus be combined for improved results from these methods. It is further understood that the debiasing training framework enables the training of a recommendation model on biased data as if it came from a balanced/unbiased dataset, and the first stage allows the measurement of the extent to which sensitive information has been removed.

In a first aspect, the present disclosure provides a method, or more specifically a computer-implemented method, for debiasing data received by or for training a recommendation system, the method comprising: receiving data comprising sensitive-correlated information; obtaining sensitivity representations of the sensitive-correlated information from the data using a plurality of neural networks trained in relation to a set of predetermined context features; deriving a learned representation from the sensitivity representations; and generating a balanced fair prediction from the recommendation system based on the learned representation.

In a second aspect, the present disclosure provides a recommendation system for providing a balanced fair recommendation or prediction based on at least one balanced fair criterion, the system comprising a plurality of neural networks trained in relation to a set of predetermined context features, wherein the system is configured to: receive data comprising sensitive-correlated information; obtain sensitivity representations of the sensitive-correlated information from the data using the plurality of neural networks; derive a learned representation from the sensitivity representations; and generate a balanced fair prediction from the recommendation system based on the learned representation.

In a third aspect, the present disclosure provides an electronic device comprising a processor and a memory, wherein the processor is configured to receive data comprising sensitive-correlated information; obtain sensitivity representations of the sensitive-correlated information from the data using a plurality of neural networks trained in relation to a set of predetermined context features; derive a learned representation from the sensitivity representations; and generate a balanced fair prediction from the recommendation system based on the learned representation.

Any of the methods described above may be realised in computer software. Therefore, there is also provided a computer readable medium, in transitory or non-transitory form, comprising instructions which, when implemented in a processor of a computing system, cause the system to implement a method as described in any preceding clause. Further, there is provided an electronic device comprising a processor and a memory, wherein the processor is configured to implement any of the methods described here.

*Brief Description of the Drawings*

Embodiments of the present invention are described below, by way of example, with reference to the following drawings.

Figure 1 is a flow diagram illustrating an example of a method for ratifying unfairness for a recommendation system according to one or more aspects of the disclosure;

Figure 2 is a pictorial diagram illustrating an example of the two-stage method of ratifying unfairness according to one or more aspects of the disclosure;

Figure 3 is a pictorial diagram illustrating an example of the results obtained from the two-stage method according to one or more aspects of the disclosure; and

Figure 4 is a block diagram of a computing device or apparatus suitable for implementing one or more aspects of the disclosure.

*Detailed Description*

Embodiments of the present invention are described below by way of example only. These examples represent the best mode of putting the invention into practice that are currently known to the applicant although they are not the only ways in which this could be achieved. The description sets forth the functions of the example and the sequence of steps for constructing and operating the example. However, the same or equivalent functions and sequences may be accomplished by different examples.

The present invention approaches the fairness problem from a data debiasing perspective, focusing on learning debiased representations of the data to be used as inputs for downstream recommendation models. This approach involves a fair feature extraction step before applying the recommendation model to determine the unbiased true relevance score of the user-item pair, thus achieving fairness by unbiasedly recommending items to the user. This approach is orthogonal to standard fairness constraint-based methods, and the two can be combined for improved results.

The present approach is operatable in two stages: Stage 1) introduction of identifiable variational autoencoder architecture (iVAE) methods for disentangling representations in recommendation systems, such that sensitive attributes can subsequently be removed through representation learning; and Stage 2) Introduction of an end-to-end adversarial algorithm which allows us to create a model that satisfies the proposed balanced fair objective. An exemplary two-stage method is described in the following sections.

Some of the benefits of the two-stage method are that: 1) improve explainability of the overall process, where the user can determine which part of the model works or is functional and which does not; 2) Improve modularity, where the user can use the intermediate results from stage 1 for different algorithms/processes as stage 1; and 3) reduce cost and time of training, it is evidenced that in the experiments of the two-stage method.

**Two-stage Method**

Here, $c \in \mathbb{R}^d$ is defined as a context variable collected from an online recommendation system, including user and item context features. The item index from the vendor is denoted as $' \in [1, \cdots, m]$ with $o_i \in 0,1$ indicating if item i is exposed to the user. The feedback of user u for item is denoted as $y \in 0,1$. The sensitive group features on the user side and producer side are denoted as $g_u \in G_u$ and $g_i \in G_i$, respectively. For the recommendation setting, $g_u$ corresponds to the indicator variable for sensitive information such as gender, while $g_i$ corresponds to sensitive information for items such as movie tags in the movie recommendation system. A representation learning framework is used, with $z_u \in \mathbb{R}^{l_u}$, $z_i \in \mathbb{R}^{l_i}$, and $z_n \in \mathbb{R}^{l_n}$ and representing neural network representations of the user sensitive features, item sensitive features, and neither user nor item sensitive features, respectively. In the following sections, more details are provided regarding these representations. Finally, the logged training dataset is denoted as $\mathbb{D} = \left(\mathbf{c}^n, o_i^n, g_u^n, g_i^n, y^n\right)_{n=1}^N$, which has been collected in a biased and unfair manner.

To address the issue of unfair feedback loops in recommendation systems, a novel objective is proposed. The novel objective differs from the traditional fairness metrics of demographic parity, equalized odds, and equal opportunity. The balanced fair objective (BFO) is defined for any downstream recommendation model $f$ as follows:

Definition 1. (Balanced Fair Objective), For any loss function $\delta$, the balanced fair objective on any downstream recommendation model $f$ is defined as:

$$L_b^f = \mathbb{E}_{\mathbf{c}, \mathbf{z_u}, \mathbf{z_i}, \mathbf{z_n}} \mathbb{E}_{o_i \sim p^{\text{uni}}(o_i | \mathbf{z_u}, \mathbf{z_i})} o_i \left[\delta(y, f(\mathbf{c}, \mathbf{z_u}, \mathbf{z_i}, \mathbf{z_n}))\right].$$
$$= \mathbb{E}_{\mathbf{c}, o_i, \mathbf{z_n}} \mathbb{E}_{\mathbf{z_u}, \mathbf{z_i} \sim p(\mathbf{z_u}, \mathbf{z_i})} o_i \left[\delta(y, f(\mathbf{c}, \mathbf{z_u}, \mathbf{z_i}, \mathbf{z_n}))\right].$$

where $\delta$ is any loss function. Balanced fairness is defined as the property that a recommendation model f* minimizes the BFO, i.e.,

Definition 2. (Balanced Fairness) A recommendation model f* is called balanced fair if the model minimizes the BFO i.e.,

$$f^* = \arg\min_f \mathbb{E}_{\mathbf{c}, \mathbf{z_u}, \mathbf{z_i}, \mathbf{z_n}} \mathbb{E}_{o_i \sim p^{\text{uni}}(o_i | \mathbf{z_u}, \mathbf{z_i})} o_i \left[\delta(y, f(\mathbf{c}, \mathbf{z_u}, \mathbf{z_i}, \mathbf{z_n}))\right]$$
$$= \arg\min_f \mathbb{E}_{\mathbf{c}, o_i, \mathbf{z_n}} \mathbb{E}_{\mathbf{z_u}, \mathbf{z_i} \sim p(\mathbf{z_u}, \mathbf{z_i})} o_i \left[\delta(y, f(\mathbf{c}, \mathbf{z_u}, \mathbf{z_i}, \mathbf{z_n}))\right]$$
$$= \arg\min_f L_b^f.$$

The present assertion is that a model can be considered balanced fair and devoid of feedback loops only if it has been trained on a dataset where recommendations are chosen uniformly irrespective of sensitive attributes, in line with its definition.

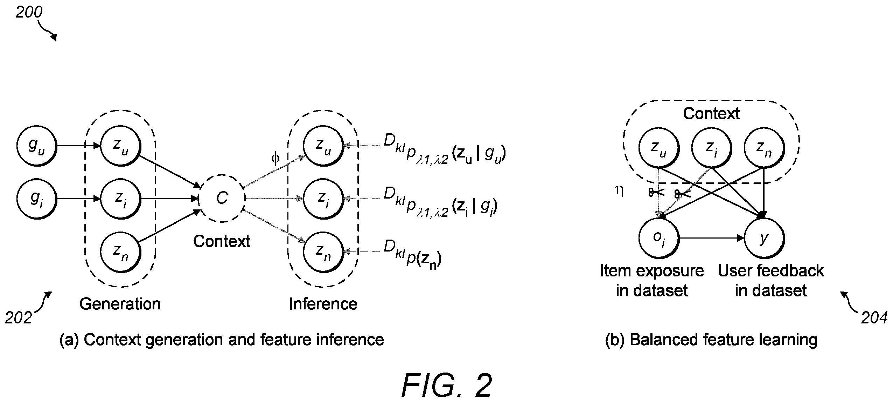

To ensure balanced fairness, a two-stage representation learning framework is herein proposed, as illustrated in Figure 2. In the first stage, an identifiable VAE is used to extract sensitive-correlated information from context features. The sensitive are disentangled from the non-sensitive information using an injective function $\phi: \mathbb{R}^d \to \mathbb{R}^z$ to obtain a representation $\mathbf{z} \in \mathbb{R}^z$ from context $\mathbf{c}$. The disentangled representation z comprises user and item sensitive representations, respectively. $\mathbf{z_n} \in \mathbb{R}^{l_n}$ captures the remaining information from the context, which is orthogonal to the sensitive attributes. (Refer to Figure 2)

The second stage involves learning a second-level representation of these sensitive representations to remove biases across sensitive groups. A novel adversarial learning strategy is proposed, where these representations are used as input to any recommendation model.

For the disentanglement learning part, the objective function is defined as

$$L_{\text{dis}}(\theta_\phi, \theta_\mathbf{h}) = -ELBO - \lambda L_n.$$

Here, ELBO represents the evidence lower bound and is computed as

$$\text{ELBO} = \mathbb{E}_{q_{\mathbb{C}}} \left[ \mathbb{E}_{q_{\theta_\phi}(z|c,g_u,g_i)} \left[ \log p_{\theta_h,\lambda_1,\lambda_2}(\mathbf{c} \mid \mathbf{z}) \right] \right.$$
$$- \mathcal{D}_{kl} \left( q_{\theta_\phi}(\mathbf{z_u} \mid \mathbf{c}, g_u, g_i) \| p_{\lambda_1,\lambda_2}(\mathbf{z_u} \mid g_u) \right)$$
$$- \mathcal{D}_{kl} \left( q_{\theta_\phi}(\mathbf{z_i} \mid \mathbf{c}, g_u, g_i) \| p_{\lambda_1,\lambda_2}(\mathbf{z_i} \mid g_i) \right)$$
$$\left. - \mathcal{D}_{kl} \left( q_{\theta_\phi}(\mathbf{z_n} \mid \mathbf{c}, g_u, g_i) \| p(\mathbf{z_n}) \right) \right]$$

The additional objective to get proper is defined as

$$L_n = \mathcal{D}_{kl}(q_{\theta_\phi}(\mathbf{z_n} \mid \mathbf{c}, g_u, g_i) \| \mathcal{N}(\lambda_1(g_u, g_i), \lambda_2(g_u, g_i)))$$

In the second stage, the disentangled representations obtained from stage one is utilized as input to a balanced representation function $\eta : \mathbb{R}^{l_u + l_i} \to \mathbb{R}^b$, along with the non-sensitive representation $Z_n$. These learned representations are then used to predict user feedback y using a downstream recommendation model $f : \mathbb{R}^{b+l_n} \to [0,1]$, as depicted in Figure 2. To achieve this, an adversarial learning strategy is proposed, the strategy comprising of two components: (1) A discriminator $D : \mathbb{R}^{l_u + l_i} \to \mathbb{R}^2$ that determines if the current representation of disentangled context features satisfies "Fair Exposure", and (2) A representation learning function n that learns balanced sensitive features, eliminating unfair factors in historical data. $\eta : \mathbb{R}^{l_u + l_i} \to \mathbb{R}^b$, along with the non-sensitive representation $Z_n$. These learned representations are then used to predict user feedback y using a downstream recommendation model $f : \mathbb{R}^{b+l_n} \to [0,1]$, as depicted in Figure 2.

The objective function of stage two is defined as $L_b(\theta_\phi, \theta_\eta, \theta_D, \theta_f) = L_b^f(\theta_\phi, \theta_\eta, \theta_f) + L_b^D(\theta_\phi, \theta_\eta, \theta_D)$, where $L_b^f$ denotes the user feedback prediction and $L_b^D$ represents the discriminator. Specifically, $L_b^f$ is given by,

$$\frac{1}{N} \sum_{t=1}^{N} o_i^t \delta \left( y^t, f \left( \eta \left( \mathbf{zu^t}, \mathbf{zi^t} \right), \mathbf{zn^t} \right) \right)$$

while $L_b^D$ is expressed as

$$\min_{\theta_f, \theta_\phi, \theta_\eta} \max_{\theta_D} L_b(\theta_\phi, \theta_\eta, \theta_D, \theta_f), \ s.t. \ \sum_{k=0}^{1} D^k(\eta(\mathbf{z_u}, \mathbf{z_i})) = 1,$$

where δ is the Kronecker delta function, $o_i^t$ is the sensitive attribute of the i-th user in the t-th instance, and y is a hyperparameter.

The present debiasing training framework enables the training of a recommendation model as if the data originated from a balanced/unbiased dataset, even with access only to biased data. Moreover, stage one of present framework enables the measurement of the degree to which sensitive information has been eliminated.

Sensitive-correlated information herein refers to sensitive information extracted from the context features using one or more methods described herein, where the underlying information may be correlated with a person or user. The sensitive-correlated information may include information related to a person's identity, i.e., identifiable information (PII). For example, the sensitive-correlated information may comprise historical items correlated to gender, preferences, ethnicity, social income status, etc.

Sensitivity representations herein refer to user/item/non sensitive representations in a representation learning framework. These user/item/non representations may be represented by one or more neural networks such that each neural network is a representation of the user sensitive features, item sensitive features, or neither user nor item sensitive features. For example, user-sensitive representation may comprise a representation of sensitive-correlated information related to a user, such as the user's gender, preferences, ethnicity, social income status, etc.

User/item/non-sensitive features refer to the attributes or characteristics of users, items, or other entities that do not contain sensitive or personally identifiable information (PII). These features can include demographic information, behavioral patterns, preferences, usage statistics, or any other relevant data that does not pose a risk to privacy or security.

A set of predetermined context features or context features herein refer to features that ascribe to context. For example, the user's historical interactions, gender, preferences etc.

Learned representation refers to an aggregate of sensitive representation of features and items exposure, where bias stemmed therefrom are removed. The learn representation may thus be derived or derivable from the sensitivity representations through a learning process using iVAEs or neural networks, where the iVAEs or networks optimize for a balanced fair objective. In other words, the learned representation is part of any end-to-end adversarial algorithm, which creates a model satisfying the balanced fair objective. An example of learned representation n is illustrated in Figure 2, where bias stemming from the sensitive features and item exposure using a learned representation n are removed.

In general, variational autoencoder architecture (VAE) is a probabilistic generative model that utilizes a prior and noise distribution. iVAE is a specialized variant of VAE that addresses the identifiability challenge and promotes the learning of disentangled and interpretable latent representations. It finds applications in various domains, including generative modeling, unsupervised learning, and representation learning.

The iVAE requires a plurality of neural networks as part of its architecture. Neural network components include an encoder and a decoder. The neural networks map the input variable to a latent space that corresponds to the parameters of a variational distribution and map from the latent space to the input space to produce or generate data.

In the present invention, iVAE incorporates identifiability constraints in its design. iVAE architecture is modified to ensure the learned latent representations are identifiable or distinguishable. Identifiability refers to the ability to recover the latent variables from the observed data uniquely. By imposing identifiability constraints, iVAE aims to disentangle and separate the underlying factors of variation in the data, leading to more interpretable and meaningful latent representations.

It is understood that specific details of the iVAE architecture may vary depending on the implementation, whether in the first stage or second. Still, in most cases, the implementation involves modifications to the loss function or the introduction of additional regularization terms that encourage identifiability. These modifications can help overcome the common problem of latent variable models where different latent configurations can produce similar outputs, making it difficult to interpret the learned representations.

For example, the neural networks herein may comprise iVAEs, where an iVAE used in the first stage may be based on the feedforward Neural network architectures as described in the iVAE paper by Khemakhem et al. 2020. Similarly, in the second stage, the feedforward networks may also be used, where the input size depends on the dimensions of the concatenated input vectors.

Balanced fair prediction is a prediction that is balanced for fairness. The prediction is made by a model (i.e., recommendation model) based on a balanced fair objective, where the balanced fair objective is minimized for the recommendation model that is deemed balanced fair. Herein Definition 2 provides an example of balanced fairness. In a commendation system, a balanced fair prediction may comprise a set of recommendations. The set of recommendations could serve as the output of the present system. The recommendations would be uniformly sampled while conditioned on the sensitive attributes. This effectively removes the inherent basis toward a (minority) particular group of users, meaning the recommendations do not take advantage of or disadvantage this group.

By ensuring that the recommendations are uniformly conditioned on the sensitive attributes, the present invention can rectify the feedback loop as in this case, in this case, it can uncover the true relevance with respect to an item and user. If the recommendations were not uniform, we could easily bias the recommendation for a sensitive group, i.e., females would always be recommended make-up irrespective of their historical interactions.

Balanced fair objective is an objective achieving balanced fairness. The objective can be achieved by minimizing a loss function $\delta$ as provided by Definition 1 herein provided. It is understood that balanced fair objective aims to achieve or derive learned representations from data, as if the training data were sampled uniformly at random, conditioned on sensitive attributes such as gender. Doing so ensures that the feedback loop is not increased in recommendation systems, allowing users not to be unfairly recommended items based on prior data.

Balanced fair criterion is a criterion derived from the balanced fair objective to achieve balanced fairness, which involves training a model on a dataset where recommendations are uniformly selected based on sensitive attributes. These sensitive attributes are removed through representative learning, for example by the identifiable VAE during the representation learning, based on the balanced fair criterion.

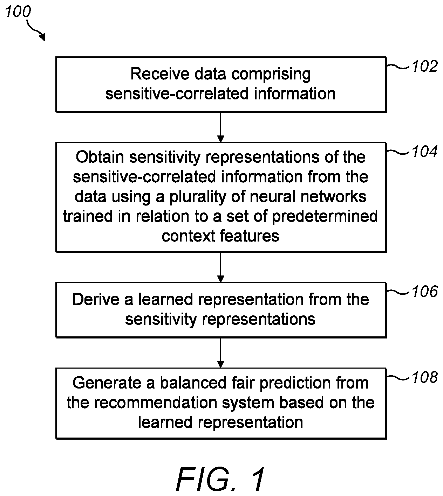

Figure 1 is a flow diagram 100 illustrating an example of a method for ratifying unfairness for a recommendation system. The method achieves this by debiasing data received by or for training a recommendation system. The method comprises two stages.

In the first stage, method 102 receives data comprising sensitive-correlated information. From the data, the method obtains 104 sensitivity representations of the sensitive-correlated information using a plurality of neural networks trained in relation to a set of predetermined context features. The set of predetermined context features may be collected from a recommendation system. The sensitivity representations may comprise representations of user features, item features, and non-sensitive features.

Subsequently, in the second stage, the method applies a learning strategy to derive 106 a learned representation from the sensitivity representations. The learned representation may comprise a balanced fair objective, where the underlying concept of balanced fairness (in the form of prediction) is defined by a balanced fair recommendation model/system that minimizes the balanced fair objective. Based on the learned representation, the method would thus generate 108 a balanced fair prediction from the recommendation model/ system.

In this stage, an adversarial learning strategy could be applied or may be applicable to generate a balanced fair prediction. The adversarial learning strategy further comprises: determining whether the sensitivity representations satisfy a balanced fair criterion, where the balanced fair criterion may be determined by minimizing the balanced fair objective; and applying a balanced representation function to a subset of sensitivity representations that satisfy the balanced fair criterion to obtain the learned representation, wherein the balanced representation function is configured to remove non-sensitive features and sensitive features from the sensitivity representations not satisfying the balanced fair criterion.

The balanced fair prediction may be part of a recommendation provided by the recommendation system to a user. Optionally, the method may incorporate the balanced fair prediction as part of the data received by the recommendation system as the method is iterated.

In general, the plurality of neural networks is configured to extract the sensitive-correlated information from the set of predetermined context features, wherein the sensitive-correlated information is represented by the sensitivity representations. The plurality of neural networks comprises a first neural network representative of user sensitive features, a second neural network representative of item sensitive features, and a third neural network representative of non-sensitive features. The first, second, and third neural networks comprise an identifiable variational autoencoder architecture. An exemplary two-stage method is described in the following sections.

Context Data Input: The initial step in the process involves inputting the necessary context data into present recommendation system. In this instance, gender is considered a sensitive attribute. To clarify, in this example, item-sensitive features are not incorporated, though it's essential to understand that they can be incorporated just as easily in a real-world scenario. Present context data consists of an assortment of information wherein gender is one of the key attributes.

Creating Disentangled Representations Using iVAE: The next step is to apply the Inferred iVAE once the context data is set. The function of iVAE is to generate representations in the latent space that effectively disentangle all the information regarding gender from the non-gender-specific information. In other words, iVAE helps us to differentiate or separate the gender-sensitive attributes from the rest, making these attributes distinct latent variables.

Removing Bias Using BFO Objective: Following the disentanglement phase, the method progresses to stage 2. In this stage, the previously created disentangled representations are leveraged, and they are integrated into the Balanced Fairness Objective (BFO). This BFO objective is designed to control and minimize the bias in the present machine learning model by adjusting the model's predictions to ensure they are fair, regardless of the sensitive attribute (gender, in this case).

Training the Model and Obtaining the Unbiased Recommendation System: After setting up the BFO objective, the method proceeds to train the model. This training process aims to teach the model to function as though operating on unbiased data. Meaning the model learns to provide recommendations as if it were trained on data such that the trained model provides recommendations that are distributed uniformly with respect to bias factors and conditioned on the sensitive attribute (i.e., gender). In other words, post-training, the recommendation system will behave as if the original input data had no bias towards any specific gender.

It is understood that the present invention enables us to create a recommendation system that treats gender fairly in its decision-making process by ensuring that the sensitive attribute does not unduly influence the recommendations.

Figure 2 is a pictorial diagram 200 illustrating an example of the two-stage method of ratifying unfairness. On the left, (a) shows the context generation process 202, where ø is the feature inference function in the disentanglement method. The method may be used in a recommendation system. The method may comprise an identifiable VAE that removes sensitive attributes through subsequent representation learning.

On the right, the figure shows process 204, where its main objective is to remove the light lines (identified by scissors), i.e., removing the bias stemming from the sensitive features and item exposure using a learned representation n. Here depicts an end-to-end adversarial algorithm that allows us to create a model that satisfies the proposed balanced fair objective.

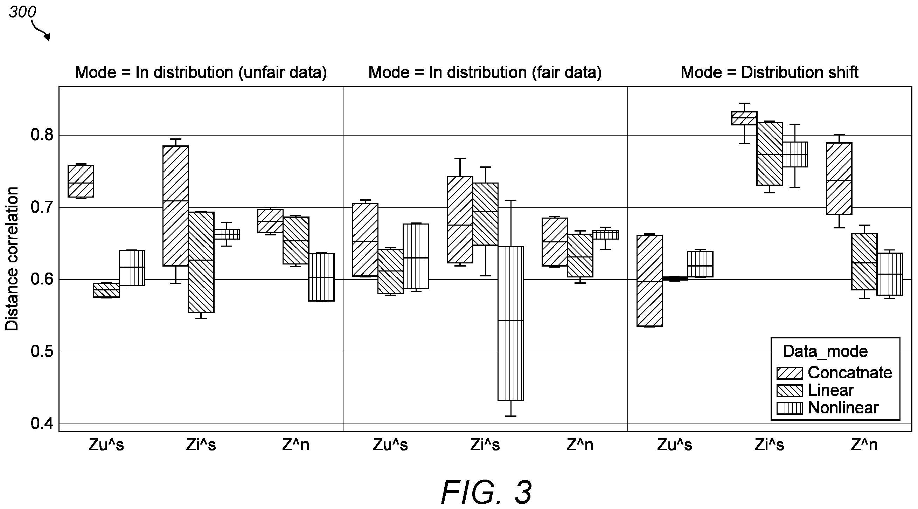

Figure 3 is a pictorial diagram illustrating an example of the results obtained from the two-stage method using synthetic data. The results verify the effectiveness of the proposed method.

Synthetic data comprises a dataset of 10,000 users with 9 sensitive groups and 32 items with 3 sensitive groups.

Each user and item have 32-dimension sensitive features and 32-dimension non-sensitive features, which are sampled from a uniform distribution U(-1, 1).

Let $zu^s$, $zi^s$ represent the sensitive features of the user and item, and $zu^s$, $zi^s$ denote the non-sensitive features of the user and item, respectively. The context $Cui$ is generated by a function $l\left(\mathbf{z}_u^s, \mathbf{z}_i^s, \mathbf{z}_u^n, \mathbf{z}_i^n\right)$, where several options for i : (1) concatenation of $\mathbf{z}_u^s, \mathbf{z}_i^s, \mathbf{z}_u^n$, and $\mathbf{z}_i^n$ are considered, (2) a linear function, and (3) a nonlinear function. Specifically, (1) A concatenation function $\mathbf{c} = \left[\mathbf{z}^n, \mathbf{z}_i^s, \mathbf{z}_u^s\right]$, (2) A linear function $\mathbf{c} = \mathbf{A}\left(\mathbf{z}^n, \mathbf{z}_i^s, \mathbf{z}_u^s\right) + b$, where is A is a randomly generated invertible matrix and b is a random vector sampled from uniform distribution U(-1, 1) and (3) A nonlinear generative process where an additional sigmoid layer is added based on linear function. The distance correlation scores for user-sensitive feature $\mathbf{z}_u^s$, item-sensitive feature $\mathbf{z}_i^s$, and non-sensitive feature $z_n$ are presented in Figure 3. Table 1 presents the results using the concatenation function. The disentanglement of all three functions is analyzed. After defining the context generation process, scores are computed based on the context. Specifically, for each item i, a score $r_{u,i}$ is defined, which is used to create a top-N exposure list. 5 items from 32 item sets are selected to recommend to the user.

$$r_{ui} = 1 - \sigma\left[a^T \kappa_1\left(\kappa_2\left([\mathbf{c}_{ui}]\right)\right) + \mathcal{N}(0, 0.02)\right)\right]$$

Based on the exposure list, feedback is generated of a user u on item i (in the exposure list) as follows:

$$x_1 = a^T \kappa_1\left(\kappa_2\left([\mathbf{c}_{ui}]\right)\right) + b, x_2 = a^T \kappa_3\left(\kappa_2\left([-\mathbf{c}_{ui}]\right)\right) + b$$

$$y_{ui} = \mathbb{I}\left(\sigma\left(x_1 + x_1 \cdot x_2\right)\right)$$

K $(\cdot)$ functions are piecewise, where k1 (x) = x - 0.5 if x > 0, otherwise k1 (x) = 0. k2 (x) = x if x > 0, otherwise k2 (x) = 0. a is normalization term. Note that the above recommendation policy is unfair since the exposure list is influenced by both sensitive and non-sensitive context information. To evaluate how well B-FAIR performs, a fair dataset for testing is generated using the below fair policy,

$$r_{ui} = 1 - \sigma\left[a^T \kappa_1\left(\kappa_2\left([z_u^n, z_i^n]\right)\right) + \mathcal{N}(0, 0.02)\right)\right]$$

In the above equation, the score function does not depend on the sensitive information and hence can be used as the fair ground truth to assess the present method.

Figure 3 further shows for each graph the distance correlation between the learned representation and the ground truth representation. If the distance correlation is well above 0.5, there is evidence that the latent representations are indeed identifiable.

At implementation, a 3:1 ratio is maintained between the training and testing sets, which includes the validation set. The data is resampled to ensure that each sensitive group has an equal number of samples in the test set. The associated statistical information is presented in Table 1. The dimensions of the user/item embeddings are empirically set to 32, and the weighting parameters $\lambda$ and y are determined within the range of [0.001, 0.5].

Different base models, such as MLP and GMF, are used for evaluation. All experiments are conducted on a server with a 16-core CPU, 128g memory, and an NVIDIA V100 GPU. For modelling user feedback, the binary cross-entropy loss is used to implement $\delta$. Categorical features for users are encoded using an embedding matrix, while continuous features are derived by multiplying with weighting matrices. Activation functions such as SoftMax function with a 2-dimension output and ELU are employed. The disentanglement function ø consists of three separate functions $\phi_u(c), \phi_i(c)$, and $\phi_n(c)$ to infer $z_u$, $z_i$ and $z_n$, respectively. Each neural network is defined as $V_1$ ELU($V_2$ ELU ($V_3[c]$)). The generate function architecture is $A_1$ELU($A_2$ELU($A_3[z_i, z_u, \mathbf{z_n}]$)). A linear layer is used for the balanced representation function, and the discriminator function is defined as $D\left(\phi\left(\mathbf{s}^n, \mathbf{s}^s\right)\right) = \mathbf{a}\left(\mathbf{B}^I \, \mathbf{E}\Gamma\cap\left(\mathbf{B}^{\delta\mathcal{U}}\left(\mathbf{s}^n, \mathbf{s}^s\right)\right)\right)$.

**Table 1: Comparisons on Synthetic data. Our proposed method B-FAIR is outperforming the baselines on mean performance (±is the standard error of the results).**

| Strategy | MLP | | | | GMF | | | |
|---|---|---|---|---|---|---|---|---|
| Metrics | AUC ↑ | ACC ↑ | N@5 ↑ | P@5 ↑ | AUC ↑ | ACC ↑ | N@5 ↑ | P@5 ↑ |
| Base | .882±.003 | .807±.002 | .851±.003 | .846±.001 | .882±.003 | .798±.002 | .849±.001 | .849±.001 |
| B-FAIR | .916±.003 | .827±.003 | .858±.002 | .863±.001 | .907±.002 | .822±.001 | .861±.003 | .858±.002 |
| B-FAIR-d | .897±.003 | .813±.003 | .853±.003 | .850±.001 | .890±.004 | .794±.001 | .853±.001 | .841±.002 |

In Table 1, B-FAIR is the proposed method, and B-FAIR-d is the reduced method without disentanglement. The table shows experiments performed under a controlled environment using synthetic data deemed fair and unbiased. Synthetic data are generated based on equations identified in the above sections. Based on the experiments, B-FAIR has achieved significant performance improvements over the base model across all four metrics (AUC, ACC, NDCG@5, and Precision@5). These metrics are appropriate standards for determining whether the present invention achieves less biased prediction. Further experiments are conducted by removing the disentanglement step(B-FAIR(-d)) to investigate individual components of the two-stage method and the impact on the present invention. As shown, B-FAIR(-d) does not perform as well as B-FAIR, indicating that the disentanglement step is crucial to the performance. These experiments have confirmed and validated the hypothesis that method B-FAIR enables successful training of a recommendation policy as if the logged data were balanced and fair.

In Figure 3, it is important to note that a higher distance correlation indicates a greater ability of the disentangling step to extract information. Furthermore, to confirm the efficacy of this stage, even in the presence of a distribution shift, three additional plots are included as shown in the figure.

Further, in Figure 3, the term "In distribution" refers to the use of fair data for both training and testing, while "Distribution Shift" implies the use of unfair data for training and fair data for testing. The bars in the figure are generally above 0.5, indicating successful learning of disentangled representations that are highly correlated with the ground truth latent variables. Notably, when $c = [z^n, z_i^s, z_u^s]$ (i.e., concatenation), the disentangling process seems to work best with the highest distance correlations, likely because it is the simplest. This is followed by the linear and non-linear mixture functions. These findings demonstrate that disentangled representations can be obtained.

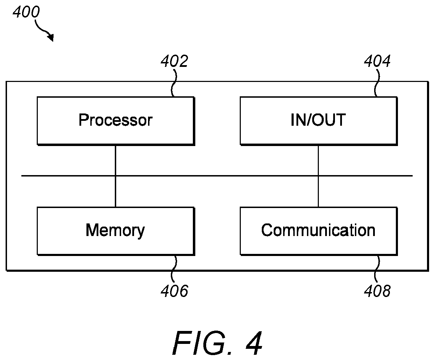

Figure 4 is a block diagram illustrating an example computing apparatus/system 400 that may be used to implement one or more aspects of the present invention, apparatus, method(s), and/or process(es) combinations thereof, modifications thereof, and/or as described with reference to figures 1 to 3 and/or as described herein.

Computing apparatus/system 400 includes one or more processor unit(s) 402, an input/output unit 404, communications unit/interface 406, a memory unit 408 in which the one or more processor unit(s) 402 are connected to the input/output unit 404, communications unit/interface 406, and the memory unit 408. In some respects, the computing apparatus/system 400 may be a server, or one or more servers networked together. In some other respects, the computing apparatus/system 400 may be a computer or supercomputer/processing facility or hardware/software suitable for processing or performing the one or more aspects of the system(s), apparatus, method(s), and/or process(es) combinations thereof, modifications thereof, and/or as described with reference to figures 1 to 3 and/or as described herein.

The communications interface 406 may connect the computing apparatus/system 400, via a communication network, with one or more services, devices, the server system(s), cloud-based platforms, systems for implementing subject-matter databases and/or knowledge graphs for implementing the invention as described herein. The memory unit 408 may store one or more program instructions, code or components such as, by way of example only but not limited to, an operating system and/or code/component(s) associated with the process(es)/method(s) as described with reference to figures 1 to 3, additional data, applications, application firmware/software and/or further program instructions, code and/or components associated with implementing the functionality and/or one or more function(s) or functionality associated with one or more of the method(s) and/or process(es) of the device, service and/or server(s) hosting the process(es)-method(s)/system(s), apparatus, mechanisms and/or system(s)/platforms/architectures for implementing the invention as described herein, combinations thereof, modifications thereof, and/or as described with reference to at least one of the figures 1 to 3. The output may be to a remote device such as a user device, not shown, in which case the output devices may be replaced by a data port.

Any of the methods described here may be implemented in the form of a computer readable medium or an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein. For example, a storage medium may be provided such as memory, computer-executable instructions such as executable code and a controller such as controller. Any of the methods described here may be implemented in an electronic device comprising a processor and a memory, wherein the processor is configured to implement any of the methods described here.

A system in which the methods described here may be implemented may include components such as, but not limited to, a plurality of central processing units (CPU), e.g., similar to controller, or any other suitable multi-purpose or specific processors or controllers, a plurality of input units, a plurality of output units, a plurality of memory units, and a plurality of storage units. Other suitable hardware components and/or software components may be included. A system may include or may be, for example, a personal computer, a desktop computer, a mobile computer, a laptop computer, a notebook computer, a terminal, a workstation, a server computer, a Personal Digital Assistant (PDA) device, a tablet computer, a network device, or any other suitable computing device.

Unless explicitly stated, the methods described here are not constrained to a particular order or sequence. Additionally, some of the described methods or elements thereof can occur or be performed at the same point in time.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Programmable Logic Devices (CPLDs), etc.

It is to be understood that a computing device used to implement any of the methods described here may be a distributed system. Thus, for instance, several devices may be in communication by way of a network connection and may collectively perform tasks described as being performed by the computing device.

It will be appreciated that a computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

The invention is not limited to solutions to any or all of the stated problems or those that have any or all of the stated benefits and advantages.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, to the extent that the term "includes" is used in either the detailed description or the claims, such term is intended to be inclusive in a manner similar to the term "comprising" as "comprising" is interpreted when employed as a transitional word in a claim.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

Features discussed above may be combined as appropriate, as would be apparent to a person skilled in the art, and may be combined except where it is expressly provided that such a combination is not possible or the person skilled in the art would understand that such a combination is self-evidently not possible.

The foregoing describes methods computer readable media and electronic devices as described in the following clauses:

Clause 1: a computer-implemented method, for debiasing data received by or for training a recommendation system, the method comprising: receiving data comprising sensitive-correlated information; obtaining sensitivity representations of the sensitive-correlated information from the data using a plurality of neural networks trained in relation to a set of predetermined context features; deriving a learned representation from the sensitivity representations; and generating a balanced fair prediction from the recommendation system based on the learned representation.

Clause 2: a recommendation system for providing a balanced fair recommendation or prediction based on at least one balanced fair criterion, the system comprising a plurality of neural networks trained in relation to a set of predetermined context features, wherein the system is configured to: receive data comprising sensitive-correlated information; obtain sensitivity representations of the sensitive-correlated information from the data using the plurality of neural networks; derive a learned representation from the sensitivity representations; and generate a balanced fair prediction from the recommendation system based on the learned representation.

Clause 3: an electronic device comprising a processor and a memory, wherein the processor is configured to receive data comprising sensitive-correlated information; obtain sensitivity representations of the sensitive-correlated information from the data using a plurality of neural networks trained in relation to a set of predetermined context features; derive a learned representation from the sensitivity representations; and generate a balanced fair prediction from the recommendation system based on the learned representation.

Clause 4: a computer readable medium comprising instructions which, when implemented in a processor of a computing system, cause the system to receive data comprising sensitive-correlated information; obtain sensitivity representations of the sensitive-correlated information from the data using a plurality of neural networks trained in relation to a set of predetermined context features; derive a learned representation from the sensitivity representations; and generate a balanced fair prediction from the recommendation system based on the learned representation.

Clause 5: as described in any previous Clauses, wherein the balanced fair prediction as part of a recommendation provided by the recommendation system to a user.

Clause 6: as described in any previous Clauses, further comprising: incorporating the balanced fair prediction as part of the data received by the recommendation system as the method is iterated.

Clause 7: as described in any previous Clauses, wherein the plurality of neural networks comprises a first neural network representative of user sensitive features, a second neural network representative of item sensitive features, and a third neural network representative of non-sensitive features.

Clause 8: as described in any previous Clauses, wherein the first, second, and third neural networks comprise an identifiable variational autoencoder architecture.

Clause 9: as described in any previous Clauses, wherein the set of predetermined context features is collected from a recommendation system.

Clause 10: as described in any previous Clauses, wherein the plurality of neural networks is configured to extract the sensitive-correlated information from the set of predetermined context features, wherein the sensitive-correlated information is represented by the sensitivity representations.

Clause 11: as described in any previous Clauses, wherein the sensitivity representations comprise representations of user features, item features, and non-sensitive features.

Clause 12: as described in any previous Clauses, wherein the learned representation comprises a balanced fair objective.

Clause 13: as described in any previous Clauses, wherein said deriving the learned representation from the sensitivity representations, further comprising: applying an adversarial learning strategy consisting of: determining whether the sensitivity representations satisfy at least one balanced fair criterion; and applying a balanced representation function to a subset of sensitivity representations that satisfy said at least one balanced fair criterion to obtain the learned representation, wherein the balanced representation function is configured to remove non-sensitive features and sensitive features from the sensitivity representations not satisfying said at least one balanced fair criterion.

Clause 14: as described in any previous Clauses, wherein said at least one balanced fair criterion is determined by minimizing the balanced fair objective.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

**Claims**

1. A computer-implemented method for debiasing data received by or for training a recommendation system, the method comprising:

   receiving data comprising sensitive-correlated information;
   obtaining sensitivity representations of the sensitive-correlated information from the data using a plurality of neural networks trained in relation to a set of predetermined context features;
   deriving a learned representation from the sensitivity representations; and
   generating a balanced fair prediction from the recommendation system based on the learned representation.

2. The method of claim 1, wherein the balanced fair prediction as part of a recommendation provided by the recommendation system to a user.

3. The method of claim 1, further comprising: incorporating the balanced fair prediction as part of the data received by the recommendation system as the method is iterated.

4. The method of any preceding claims, wherein the plurality of neural networks comprises a first neural network representative of user sensitive features, a second neural network representative of item sensitive features, and a third neural network representative of non-sensitive features.

5. The method of claim 4, wherein the first, second, and third neural networks comprise an identifiable variational autoencoder architecture.

6. The method of any preceding claims, wherein the set of predetermined context features is collected from a recommendation system.

7. The method of any preceding claims, wherein the plurality of neural networks is configured to extract the sensitive-correlated information from the set of predetermined context features, wherein the sensitive-correlated information is represented by the sensitivity representations.

8. The method of any preceding claims, wherein the sensitivity representations comprise representations of user features, item features, and non-sensitive features.

9. The method of any preceding claims, wherein the learned representation comprises a balanced fair objective.

10. The method of any preceding claims, wherein said deriving the learned representation from the sensitivity representations, further comprising: applying an adversarial learning strategy consisting of:

    determining whether the sensitivity representations satisfy at least one balanced fair criterion; and
    applying a balanced representation function to a subset of sensitivity representations that satisfy said at least one balanced fair criterion to obtain the learned representation, wherein the balanced representation function is configured to remove non-sensitive features and sensitive features from the sensitivity representations not satisfying said at least one balanced fair criterion.

11. The method of claim 10, wherein said at least one balanced fair criterion is determined by minimizing the balanced fair objective.

12. A computer readable medium comprising instructions which, when implemented in a processor of a computing system, cause the system to implement a method as claimed in any preceding claim.

13. A recommendation system for providing a balanced fair recommendation or prediction based on at least one balanced fair criterion, the system comprising a plurality of neural networks trained in relation to a set of predetermined context features, wherein the system is configured to:

receive data comprising sensitive-correlated information;
obtain sensitivity representations of the sensitive-correlated information from the data using the plurality of neural networks;
derive a learned representation from the sensitivity representations; and
generate a balanced fair prediction from the recommendation system based on the learned representation.

14. The system of claim 14, wherein the system is further configured according to any preceding claims 2 to 11.

15. An electronic device comprising a processor and a memory, wherein the processor is configured to implement a method as claimed in any preceding claims 1 to 11.

**Amended claims in accordance with Rule 137(2) EPC.**

1. A computer-implemented method for debiasing data received by or for training a recommendation system, the method comprising:

receiving (102) data comprising sensitive-correlated information correlated with a user;
obtaining (104) sensitivity representations of the sensitive-correlated information from the data using a plurality of neural networks trained in relation to a set of predetermined context features;
deriving (106) a learned representation from the sensitivity representations; and
generating (108) a balanced fair prediction from the recommendation system based on the learned representation

2. The method of claim 1, wherein the balanced fair prediction as part of a recommendation provided by the recommendation system to a user.

3. The method of claim 1, further comprising: incorporating the balanced fair prediction as part of the data received by the recommendation system as the method is iterated.

4. The method of any preceding claims, wherein the plurality of neural networks comprises a first neural network representative of user sensitive features, a second neural network representative of item sensitive features, and a third neural network representative of non-sensitive features.

5. The method of claim 4, wherein the first, second, and third neural networks comprise an identifiable variational autoencoder architecture.

6. The method of any preceding claims, wherein the set of predetermined context features is collected from a recommendation system

7. The method of any preceding claims, wherein the plurality of neural networks is configured to extract the sensitive-correlated information from the set of predetermined context features, wherein the sensitive-correlated information is represented by the sensitivity representations

8. The method of any preceding claims, wherein the sensitivity representations comprise representations of user features, item features, and non-sensitive features.

9. The method of any preceding claims, wherein the learned representation comprises a balanced fair objective.

10. The method of any preceding claims, wherein said deriving the learned representation from the sensitivity representations, further comprising: applying an adversarial learning strategy consisting of:

determining whether the sensitivity representations satisfy at least one balanced fair criterion; and
applying a balanced representation function to a subset of sensitivity representations that satisfy said at least one balanced fair criterion to obtain the learned representation, wherein the balanced representation function is configured to remove non-sensitive features and sensitive features from the sensitivity representations not satisfying said at least one balanced fair criterion.

11. The method of claim 10, wherein said at least one balanced fair criterion is determined by minimizing the balanced fair objective.

12. A computer readable medium comprising instructions which, when implemented in a processor of a computing system, cause the system to implement a method as claimed in any preceding claim.

13. A recommendation system for providing a balanced fair recommendation or prediction based on at least one balanced fair criterion, the system comprising a plurality of neural networks trained in relation to a set of predetermined context features, wherein the system is configured to:

receive (102) data comprising sensitive-correlated information correlated with a user;
obtain (104) sensitivity representations of the sensitive-correlated information from the data using the plurality of neural networks;
derive (106) a learned representation from the sensitivity representations; and
generate (108) a balanced fair prediction from the recommendation system based on the learned representation

14. The system of claim 13, wherein the system is further configured according to any preceding claims 2 to 11.

15. An electronic device for training a recommendation system according to claim 13, the electronic device comprising a processor and a memory, wherein the processor is configured to implement a method as claimed in any preceding claims 1 to 11.

100

Receive data comprising
sensitive-correlated information ~102

Obtain sensitivity representations of the
sensitive-correlated information from the
data using a plurality of neural networks
trained in relation to a set of predetermined
context features ~104

Derive a learned representation from the
sensitivity representations ~106

Generate a balanced fair prediction from
the recommendation system based on the
learned representation ~108

## FIG. 1

(a) Context generation and feature inference

(b) Balanced feature learning

*FIG. 2*

EP 4 488 879 A1

*FIG. 3*

400

402 404

| Processor | | IN/OUT |

| Memory | | Communication |

406 408

# FIG. 4

Europäisches
Patentamt
European
Patent Office
Office européen
des brevets

# EUROPEAN SEARCH REPORT

Application Number

EP 23 18 3596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Schnabel Tobias ET AL: "Recommendations as Treatments: Debiasing Learning and Evaluation", arXiv (Cornell University), 27 May 2016 (2016-05-27), XP093110506, Ithaca DOI: 10.48550/arxiv.1602.05352 Retrieved from the Internet: URL:https://arxiv.org/pdf/1602.05352.pdf [retrieved on 2023-12-08] * the whole document * | 1-15 | INV. G06N3/045 G06N3/0455 G06N3/047 G06N3/088 G06N3/094 H04N21/482 G06Q30/0241 |
| T | YANG MENGYUE ET AL: "Rectifying Unfairness in Recommendation Feedback Loop", PRACTICE AND EXPERIENCE IN ADVANCED RESEARCH COMPUTING, ACMPUB27, NEW YORK, NY, USA, 23 July 2023 (2023-07-23), pages 28-37, XP059123541, DOI: 10.1145/3539618.3591754 ISBN: 978-1-4503-9913-5 * abstract * | 1-15 | |

TECHNICAL FIELDS SEARCHED (IPC)

G06N
H04N
G06Q

The present search report has been drawn up for all claims

| Place of search | Date of completion of the search | Examiner |
|---|---|---|
| The Hague | 11 December 2023 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)